(19) Europäisches Patentamt
European Patent Office
Office européen des brevets

(11)     **EP 1 892 092 B1**

(12)     **EUROPEAN PATENT SPECIFICATION**

(45) Date of publication and mention
of the grant of the patent:
**07.04.2010 Bulletin 2010/14**

(51) Int Cl.:
***B32B 27/08*** (2006.01)

(21) Application number: **06076772.0**

(22) Date of filing: **25.09.2006**

(54) **Heat-shrinkable multilayer casing film and process for production thereof**

Wärmeschrumpfbare mehrschichtige Verpackungsfolie und Verfahren zu ihrer Herstellung

Film pour boyau multicouche thermorétractable et procédé pour sa production

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.08.2006 JP 2006227834**

(43) Date of publication of application:
**27.02.2008 Bulletin 2008/09**

(73) Proprietor: **Kureha Corporation Tokyo 103-8552 (JP)**

(72) Inventors:
• **Ibe, Seiichi, c/o Packaging Materials Res. Lab. Omitami-City Ibaraki 311-3436 (JP)**
• **Ishii, Hitoshi, c/o Packaging Materials Res. Lab. Omitami-City Ibaraki 311-3436 (JP)**

(74) Representative: **de Lang, Robbert-Jan Exter Polak & Charlouis B.V. J.J. Viottastraat 31 1071 JP Amsterdam (NL)**

(56) References cited:
**EP-A1- 0 589 431      EP-A1- 1 172 202**
**EP-A1- 1 269 852      EP-A2- 0 974 452**

**Description**

TECHNICAL FIELD:

The present invention relates to a heat-shrinkable multilayer casing film for packaging foods, such as sausage and ham. More specifically, the present invention relates to a heat-shrinkable multilayer casing film excellent in lay-flat width stability and ring-formability and having been improved in color irregularity in case of forming a colored casing.

BACKGROUND ART:

Hitherto, there have been known multilayer casings comprising a polyamide resin and a polyolefin resin as casings to be filled with pasty food, such as a sausage and ham, and these casings have been widely used as they satisfy various properties, such as gas-barrier property, meat adhesion, heat resistance and strength. For example, Patent document 1 listed below discloses: a multilayer casing film, comprising at least three layers including two polyamide layers, and an adhesive polyolefin layer disposed between the two polyamide layers; wherein at least one of the polyamide layers comprises a polyamide homopolymer, one polyamide layer comprising a polyamide homopolymer has a higher melting point and a smaller thickness than the other polyamide layer, and the adhesive polyolefin layer is in direct contact with at least one of the polyamide layers and comprises an acid-modified α-olefin resin. The multilayer casing film is described to retain the layers firmly bonded to each other during and after stretching, have heat resistance and be excellent in thermal stability during forming and processing. Further, the resultant polyamide-polyolefin complex multilayer casing film is described to be improved in high-temperature creep resistance, water vapor-barrier property, meat adhesion, shirrability, etc. As specific resin layer structures, there are disclosed, e.g., polyamide copolymer layer/adhesive polyolefin layer/polyolefin resin layer/adhesive resin layer/polyamide homopolymer layer, etc., including description of heat-shrinkable multilayer casing films having layer structures of, e.g., Ny6-66/mod-PO/VLDPE/mod-PO/Ny6 in Examples thereof.

Further, Patent document 2 shown below discloses a multilayered tubular packaging casing for pasty matter, on a basis of polyamide, characterized in that it is essentially comprised of: an outer layer based on aliphatic polyamide, aliphatic copolyamide, aliphatic copolyamide or of a polymer blend comprising these polymers, a central layer comprising polyolefin, and an adhesion-promoting component, and an inner layer based on aliphatic and/or partially aromatic polyamides and/or aliphatic and/or partially aromatic copolyamides; which casing shows, in case of the exposure up to 90°C, shrinkage of less than 20% in the longitudinal and transverse directions. The casing is described to have a gas-barrier property and a meat-adhesion property, and as a specific example thereof, a three-layer film of outer layer Ny6/HDPE + adhesion-promoting component (blend)/Ny6 is disclosed in Examples.

Further, Patent document 3 discloses a tubular biaxially stretched heat-shrinkable multilayer film comprising three layers of Ny6-66/EVA + EMAA (blend)/Ny6-66, and Patent document 4 discloses a tubular biaxially stretched heat-shrinkable multilayer film comprising three layers of Ny6-66/VLDPE + EMAA (blend)/Ny6-66.

The above-mentioned conventional heat-shrinkable multilayer casing films for pasty food show a considerable degree of satisfaction of required various properties but is not fully satisfactory. Properties not yet satisfactory as a casing packaging material for pasty food, such as sausage and have include, e.g., the following. Thus, according to conventional materials and materials for such a casing and a process for production thereof, a size irregularity in casing film width (lay-flat width (size) irregularity) is liable to occur, and in case of formation of ring-form processed sausage-filled products which are sometimes liked by purchasers, necks and/or wrinkles are liable to occur, thus resulting in apparently inferior product. Further in the case of forming colored casings which are also sometimes preferred owing to purchasers' liking, a problem of color irregularity has been observed. The above-mentioned patent documents have not referred to these problems at all and, in fact, the resultant casing films have involved these problems.

Patent document 1: WO 00/59724A1
Patent document 2: JP 3275012B (corr. to EP 0467039B)
Patent document 3: JP 6-189668A
Patent document 4: JP 6-197679A

DISCLOSURE OF INVENTION

Accordingly, a principal object of the present invention is to provide a heat-shrinkable multilayer casing film which has provided improvements in problems, such as lay-flat width stability, ring-formability and color irregularity of colored casing, of conventional heat-shrinkable multilayer casing films, while retaining suitable properties, such as gas-barrier property, meat adhesion, heat resistance, strength and shirrability.

As a result of the present inventors' study with the above-mentioned object including a repetition of trial productions, it has been discovered that the above-mentioned object is effectively achieved by a multilayer casing film of at least 5 layers which is categorized in a heat-shrinkable multilayer casing film having a structure including polyamide layers on both sides also adopted in conventional products but is formed by specifying the species of polyamides on both sides and a total thickness of the both-side polyamide layers relative to the whole layer thickness and by using a layer of an ethylene-vinyl acetate copolymer resin having a very limited vinyl acetate content as an intermediate layer. The heat-shrinkable multilayer casing film according to the present invention is based on the above finding and is more specifically characterized by comprising at least 5 layers including an outer layer (a) comprising an aliphatic copolyamide resin, an adhesive resin layer (b), an intermediate layer (c) comprising an ethylene-vinyl acetate copolymer resin having a vinyl acetate content of 3 - 12 wt.%, an adhesive resin layer (b), and an inner layer (d) comprising an aliphatic polyamide resin, disposed in an order of from the outer layer toward the inner layer; wherein the multilayer casing film has a hot-water shrinkability at 90°C of 10 - 30 wt.% each in a longitudinal direction and a transverse direction, and a total thickness of the outer layer (a) and the inner layer (b) is 40 - 60 % of a whole layer thickness of the multilayer casing film.

The - thus obtained heat-shrinkable multilayer casing film of the present invention is provided with a reduced lay-flat width irregularity (in a lateral or transverse direction) of at most $\pm$ 5 mm, is excellent in finish of the product with content and also is excellent in ring-formability (or ring-form processability). Further, by using an ethylene-vinyl acetate copolymer resin (hereinafter sometimes abbreviated as "EVA") as an intermediate layer, a better mutual solubility with a colorant of pigment or dye is accomplished than a conventional intermediate layer comprising polyethylene (inclusive of LDPE, MDPE, HDPE, LLDPE, VLDPE, etc.), and a better dispersion of the colorant is accomplished to provide an improvement in color irregularity of a colored casing film. Compared with Patent document 1 as a prior art reference, in brief words, the heat-shrinkable multilayer casing film of the present invention is most characterized by the use of EVA instead of VLDPE as a typical intermediate layer resin in the multilayer casing film of Patent document 1. According to a conventional knowledge before the present invention, the replacement of the resin constituting the intermediate layer would have been expected to result in inferior performances, such as thermal decomposition during melt-extrusion processing and degradation of moisture permeability, heat resistance and interlayer adhesion, but the present invention has succeeded in achievement of the object, i.e., improvements in lay-flat width stability, ring-formability and color irregularity of colored casing while obviating essential deterioration of the above-mentioned properties, by using an EVA resin having a vinyl acetate content in a very narrow range of 3 - 12 wt.%.

BRIEF DESCRIPTION OF THE DRAWING

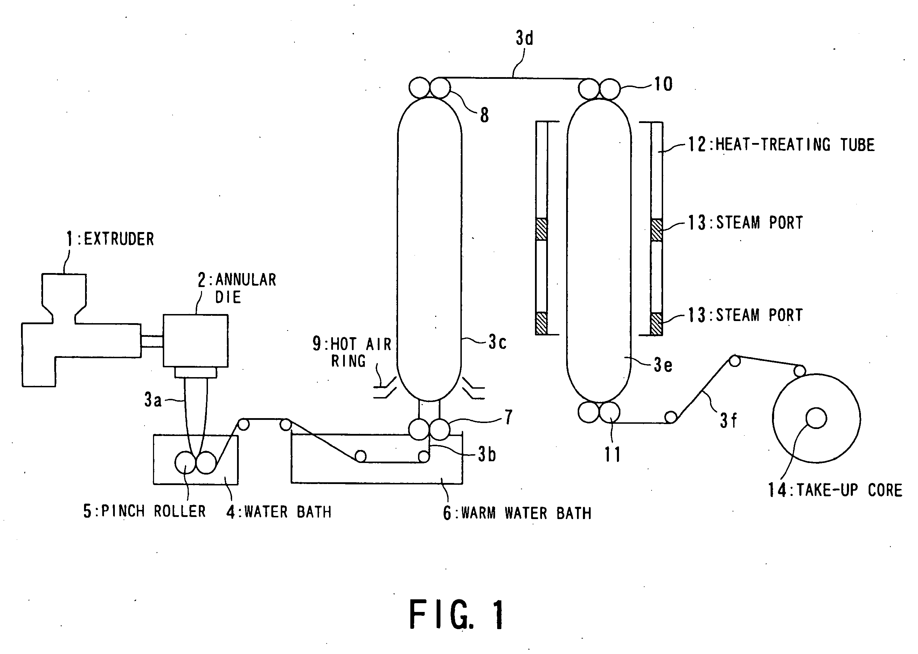

Fig. 1, a sole figure in the drawing, is an illustration of an apparatus system used for production of heat-shrinkable multilayer casing films in Examples of the present invention and Comparative Examples.

BEST MODE FOR PRACTICING THE INVENTION

The outer layer (a) of the multilayer casing film of the present invention comprises an aliphatic copolyamide which has a better stretchability than an aliphatic homo-polyamide. Herein, the aliphatic copolyamide means a polyamide formed from a (di)amine unit and a (di)carboxylic acid unit, of which at least one comprises two or more species thereof. Preferred examples thereof may include: nylon 6-66 (sometimes abbreviated as Ny6-66), nylon 6-12, nylon 6-69, nylon 6-610 and nylon 66-610. Among these, nylon 6-66 is particularly preferred in view of good balance of stretchability and mechanical strength.

The adhesive resin layer (b) constituting the multilayer casing film of the present invention is inserted between the aliphatic copolyamide outer layer (a) or the aliphatic polyamide inner layer (d) disposed adjacent thereto and an intermediate layer so as to be in contact with the polyamide layers, particularly the aliphatic polyamide inner layer (d), which contributes to an improvement in high-temperature creep resistance but has insufficient stretchability by itself, thereby improving the stretchability of the whole casing while preventing the occurrence of cracks in the polyamide layer (s) during the forming and processing. More specifically, the adhesive resin layer may comprise an acid-modified polyolefin, i.e., a modified product obtained by modifying an olefin resin, particularly an ethylene-$\alpha$-olefin copolymer, as a base polymer with a relatively small amount (0.01 - 10 wt.%) of an acid modifier selected from unsaturated acids such as maleic acid and fumaric acid, and acid anhydrides or esters of these, and can also comprise a mixture containing such an acid-modified polyolefin in a proportion exceeding 50 wt.% with another thermoplastic resin, such as non-modified polyolefin or ionomer resin. Preferred examples of the ethylene-$\alpha$-olefin copolymer (particularly a copolymer of ethylene and an $\alpha$-olefin having 3 - 8 carbon atoms having an $\alpha$-olefin content of at most 30 wt.%) as a preferable base polymer, may include: very low-density polyethylene (VLDPE), linear low-density polyethylene (LLDPE), and ho-mogeneous ethylene-$\alpha$-olefin copolymers polymerized by using single-site catalysts. The degree of acid modification of the acid-modified polyolefin or the ratio of mixing of another thermoplastic resin may be determined in relation to the bonding strength with the adjacent polyamide layers, particularly the aliphatic polyamide inner layer (d), and the heat resistance of the resultant adhesive polyolefin layer, and more specifically, may be determined so as to provide an inter-layer adhesion of at least 100 g/15 mm, particularly at least 200 g/15 mm, when laminated with the aliphatic polyamide inner layer (d).

Further preferred properties of the acid-modified polyolefin (or a mixture principally containing it (in a proportion exceeding 50 wt.%) with another thermoplastic resin) may include: a melting point of at least 110°C (or a density of ca. 0.850 g/cm$^3$ or hither) from the viewpoint of heat-resistance in the food production step, a density of at most 0.935 g/cm$^3$ from the viewpoint of co-stretchability with the polyamide layer, and a Vicat softening point of at most 100 °C from the viewpoint of adhesion with the polyamide layer.

The intermediate layer (c) constituting the multilayer casing film of the present invention comprises an ethylene-vinyl acetate copolymer (EVA), particularly one having a vinyl acetate content of 3 - 12 wt.%, preferably 4 - 10 wt.%, further preferably 4 - 8 wt.%.

Now, if the vinyl acetate content is below 3 wt.%, the effects of improving the width irregularity, the ring-formability and color irregularity in the case of forming colored casings (which are the objective effects of the present invention) become scarce. On the other hand, in excess of 12 wt.%, it becomes difficult to obviate an odor of vinyl acetate due to thermal decomposition of the resin since the resin is subjected to a relatively high melt resin temperature of ca. 240 - 250 °C at the time of co-extrusion with the aliphatic (co-)polyamide resin. Further, as for the properties of the product multilayer casing film, the moisture permeability is increased to result in a weight loss in the case of, e.g., sausage packaging, and also the heat resistance is liable to be lowered to result in an inferior creep resistance. Further, a higher vinyl acetate content is liable to result in inferior mutual solubility with polyethylene resin as the base polymer of adhesive resin layer (b), thus lowering the inter-layer adhesion.

The inner layer (d) comprising an aliphatic polyamide resin of the multilayer casing film of the present invention functions to harmonize the high-temperature creeps resistance and stretchability and also improve the meat adhesion with contents such as sausage of the product multilayer casing film in combination with the above-mentioned aliphatic copolyamide outer layer (a), intermediate layer (c) comprising EVA and adhesive resin layers (b). While a copolyamide similar to the one used in the outer layer (a) can also be used, it is preferred to use an aliphatic polyamide homopolymer exhibiting better high-temperature creep resistance and meat adhesion with the contents. Herein, the polyamide homopolymer means a polyamide having a form of polycondensate between one acid unit and one amine unit and can be either of nylon 1-type (e.g., nylon 6 (sometimes abbreviated as Ny6), nylon 11, nylon 12, etc.) formed by ring-opening polymerization of ω-lactam or, polycondensation between molecules of a single ω-amino acid) and nylon m(n+2)-type (e.g., nylon 66 (sometimes abbreviated as Ny66), nylon 610, nylon 612, etc.) formed by polycondensation between a single species of diamine and a single species of dicarboxylic acid. It is particularly preferred to use nylon 6.

The aliphatic polyamide resin constituting the inner layer (d) may comprise a single species of or a blend of two or more species of the above-mentioned preferably homo-polyamide so as to have a melting point in a range of preferably 160 - 260 °C, more preferably 170 - 230 °C, and also preferably a melting point which is higher by 20 - 100 °C than that of the aliphatic copolyamide resin constituting the outer layer (a), thereby ensuring a high-temperature creep resistance required of the multilayer casing film of the present invention. Within an extent of such a range of melting point (referring herein to a peaktop temperature of a main peak on a DSC heat-absorption curve), it is also possible to blend up to 30 wt.% of an aliphatic copolyamide, an aromatic polyamide or another thermoplastic resin.

The heat-shrinkable multilayer casing film of the present invention comprises at least 5 layers of the aliphatic copolyamide resin outer layer (a), the adhesive resin layer (b), the intermediate layer (c) comprising an ethylene-vinyl acetate copolymer having a vinyl acetate content of 3 - 12 wt.%, the adhesive resin layer (b) and the aliphatic polyamide resin inner layer (d), respectively mentioned above, but it is possible to insert an optional intermediate layer additionally. Examples of such an additional intermediate layer may include an aliphatic copolyamide resin layer disposed adjacent to an aliphatic polyamide homopolymer layer constituting the inner layer (d), and a gas-barrier resin layer. As examples of the gas-barrier resin, it is possible to enumerate: saponified products of ethylene-vinyl acetate copolymers (EVOH); aromatic polyamides comprising an aromatic diamine, such as nylon MXD6; and aromatic diamines comprising an aromatic carboxylic acid, such as nylon 6I-6T.

Preferred lamination structure examples of the multilayer casing film according to the present invention including optional intermediate layers may include those enumerated hereinbelow each including layers described sequentially from an outer layer to an inner layer:

(1) aliphatic copolyamide resin outer layer (a) / adhesive resin layer (b)/EVA intermediate layer (c)/adhesive resin layer (b)/aliphatic polyamide resin inner layer (d);
(2) aliphatic copolyamide resin outer layer (a)/gas-barrier resin layer/adhesive resin layer (b)/EVA intermediate layer (c)/ adhesive resin layer (b)/aliphatic polyamide resin inner layer (d); and
(3) aliphatic copolyamide resin outer layer (a)/adhesive resin layer (b)/ EVA intermediate layer (c)/ adhesive resin layer (b)/additional aliphatic copolyamide resin layer/aliphatic polyamide resin inner layer (d).

In the heat-shrinkable multilayer casing film of the present invention, relative thicknesses of the respective layers are another important factor. More specifically, a total thickness of the aliphatic copolyamide resin outer layer (a) and the aliphatic polyamide resin inner layer (d) (and also optionally added additional aliphatic copolyamide resin layer) must occupy 40 - 60 % of a total thickness of all the layers (whole layer thickness). If this thickness ratio is below 40 %, the stretchability of the film during the production becomes inferior and also the oxygen gas-barrier property of the resultant film is liable to be unsatisfactory. In excess of 60 %, the product casing film is liable to have inferior lay-flat width stability and ring-formability and also lower moisture permeability.

As for the respective layer thicknesses, it is desirable that the outer layer (a) has a thickness of 10 - 40$\mu$m; each of the adhesive resin layers (b), 0.5 - 3 $\mu$m; the intermediate layer (c), 20 - 70 $\mu$m; and the inner layer (d), 3 - 10 $\mu$m. As for optionally added layers, it is preferred that the gas-barrier resin layer has a thickness of 2 - 20 $\mu$m, and the additional aliphatic copolyamide resin layer has a thickness of 5 - 10 $\mu$m.

The heat-shrinkable multilayer casing film of the present invention may have a total thickness of 20 - 120 $\mu$m, preferably 25 - 100 $\mu$m, further preferably 30 - 80 $\mu$m. Below 20 $\mu$m, the multilayer film is liable to have poor stretchability at the time of production thereof and result in insufficient strength and gas-barrier property. In excess of 120 $\mu$m, the multilayer film is liable to have inferior stretchability again and also inferior shirrability and ring-formability.

The heat-shrinkable multilayer casing film of the present invention can be colored for the purpose of improving the outer appearance of the product and preventing the deterioration of the contents. For the coloring, while it is possible to color the aliphatic (co-)polyamide resin of the outer and inner layers, it is preferred to color the EVA resin layer as the intermediate layer in order to obviate the deterioration of the colorant due to heat, etc. The colorant, such as inorganic pigment, organic pigment or dye, may preferably be used by way of melt-mixing it with polyethylene resin or an ethylene copolymer resin to form a master batch (hereinafter sometimes abbreviated as "M/B") and adding the M/B for mixing in a proportion of 1 - 40 wt.%., particularly 1 - 30 wt.%, with the intermediate layer EVA resin. The hue of the colored film may be diverse, such as white, black, gold, silver, brown, red or blue. As mentioned before, in the present invention using an intermediate layer of EVA resin, the added colorant, such as pigment or dye is allowed to have good compatibility with the resin and is therefore well dispersed in the resin to provide an improvement in color irregularity of the colored casing film.

In the process for producing a heat-shrinkable multilayer casing film according to the present invention, there is suitably adopted a so-called triple bubble-scheme wherein a parison formed by melt-coextrusion of at least 5 layers including an outer layer (a) comprising an aliphatic copolyamide resin, an adhesive resin layer (b), an intermediate layer (c) comprising an ethylene-vinyl acetate copolymer resin having a vinyl resin content of 3 - 12 wt.%, an adhesive resin layer (b) and an inner layer (d) comprising an aliphatic polyamide resin laminated in this order from the outer layer to the inner layer, is quenched and re-heated in a hot-water bath; air is injected into the parison to effect inflation biaxial stretching at a stretching ratio of 2.5 - 4 times each in longitudinal and transverse directions, thereby forming a stretched multilayer casing film; air is again injected into the casing film to effect a heat treatment for relaxation at 3 - 10 % each in the longitudinal and transverse directions with hot water or steam of 70 - 95°C in a heat-treating tube, the thus-formed casing film is generally caused to have a lay-flat width (i.e., a width in a laid-flat and superposed state) in a range of 50 - 240 mm.

As for setting of preferred conditions for various matters in the above-mentioned production process, regarding the setting of re-heating temperature at 70 - 95°C for the stretching, the stretching becomes difficult below 70°C due to insufficient softening of the parison, and above 95°C, the crystallization of the aliphatic polyamide resin(s) proceeds to increase the rigidity of the parison, thus making the stretching difficult. The stretching ratio of 2.5 - 4 times is a suitable ratio for the inflation biaxial stretching, and at a ratio below 2.5 times, the inflated bubble is not stabilized, whereas at a ratio exceeding 4 times, the bubble is liable to puncture. As for the relaxation heat-treatment temperature of 70 - 95°C, the heat treatment effect is scarce below 70°C, and in excess of 95°C, the hot-water shrinkability is excessively lowered and the ring-formability also becomes inferior.

As for the relaxation ratio of 3 - 10 %, the movement of the bubble is fluctuated and unstable in the heat-treating tube at a ratio below 3 %, and at a ratio in excess of 10 %, the hot-water shrinkability is excessively lowered and the ring-formability also becomes inferior.

Preferred properties of the heat-shrinkable multilayer casing film of the present invention produced according to the above layer structure and through control of the production conditions may include the following.

The hot-water shrinkability at 90°C of the heat-shrinkable multilayer casing film of the present invention is desirably 10 - 30 %, preferably 13 - 30 %, further preferably 15 - 30 %, in each of the longitudinal and transverse directions. If the shrinkability is below 10 %, the casing film filled with sausage is liable to cause wrinkles or provide a poor surface tension due to insufficient shrinkage at the time of cooking, and in excess of 30%, the casing film filled with sausage is liable to cause leaping of aluminum clips clipping both ends of the casing or breakage of the film at the time of cooking.

The heat-shrinkable multilayer casing film of the present invention is allowed to have a restricted lay-flat width irregularity (fluctuation) in the transverse direction of at most $\pm$5 mm, preferably at most $\pm$4 mm, further preferably at most $\pm$3 mm. If the lay-flat width irregularity exceeds $\pm$5 mm, a packaged product filled with sausage is caused to have a diameter irregularity, leading to a weight irregularity of each product and an inferior finish appearance.

The heat-shrinkable multilayer casing film of the present invention is excellent in ring-formability (i.e., processability into a ring-form finish) which is sometimes preferred for easy handling of a relatively large sausage product and for adaptation to purchaser's liking of appearance. The ring-formation of a tubular casing film may be performed by using a ring-form processing machine (e.g., one available from Kureha Corp.) in such a manner that one side of a biaxially stretched multilayer casing is dipped in a hot water-bath at 95 - 100 °C while being injected with air and subjected to a heat-shrinking treatment using a conical roller, thereby being processed into a ring form. As a result, the processed casing is caused to provide a ring-form sausage product when filled with sausage. The ring-form processing is performed by changing the conditions of hot water temperature, air injection rate, processing speed (processing time), etc., so as to provide a product having a ring-form inner diameter of 10 cm (referred to as 10D), 15 cm (15D), 20 cm (20D), etc.

The heat-shrinkable multilayer casing film of the present invention can be easily processed into a ring form, and the ring-form casing product is filled with sausage to provide a ring-form sausage product almost free from necks (or depressions) or wrinkles on its outer circumference and inner circumference and having a good appearance with an excellent circularity.

The heat-shrinkable multilayer casing film of the present invention may desirably have an oxygen gas permeability of at most 300 $cm^3/m^2$.day.atm as measured under the conditions of 23°C and 80 % R.H. (relative humidity) from the viewpoint of preventing oxidative degradation (or rotting) of the contents, such as sausage and ham.

Further, the heat-shrinkable multilayer casing film of the present invention may desirably have a moisture (water vapor) permeability of at most 40 $g/m^2$ day, preferably at most 35 $g/m^2$.day, further preferably at most 30 $g/m^2$.day as measured under the conditions of 40°C and 90 % R.H. so as to prevent the weight loss of the contents.

[Examples]

Hereinbelow, the present invention will be more specifically described with reference to Examples and Comparative Examples.

In Examples and Comparative Examples, multilayer casing films were prepared by using resin materials shown with their abbreviations in Table 1, wherein the brown master batch (M/B) used in VLDPE2, LLDPE2 and EVA3 is one formed by adding 20 wt.% of red iron oxide to LDPE as the base resin ("SPEM-9X714", made by Sumika Color K.K.), and the slipping agent master batch (M/B) used in PA2 is one formed by adding 6 wt.% of calcium carbonate to EAA (ethylene-acrylic acid copolymer) ("PEM-7Y1442", made by Sumika Color K.K.).

Incidentally, properties of resins described are based on those measured according to the following methods.

(1) Melting point of resin (Tm)

By using "DSC7" (made by Perkin-Elmer Corp.), ca. 10 mg of a measurement sample is subjected to temperature increase at a rate of 20°C/min; to obtain a heat-absorption curve, on which a peaktop temperature is measured as a melting point. In a case of showing plural peaks, a principal peak is taken and the peaktop temperature thereof is determined as resin melting point.

(2) Melt flow rate (MFR)

Measured according to JIS K 7210.

[Table 1]

| Resin materials used in Examples and Comparative Examples | | | | | | |
|---|---|---|---|---|---|---|
| Abbreviation | Maker | Grade | Contents | Density (g/cm$^3$) | Tm (°C) | MFR (g/10min) |
| Co-PA | Toray K.K. | AMILAN CM6041XF | 6 - 66 nylon copolymer (copolymerization wt. ratio = 85/15) | 1.13 | 195 | - |
| mod-VLDPE | Mitsubishi Kagaku K.K. | MODIC F-533T | Maleic acid-modified VLDPE | 0.901 | 124 | 3.0 |
| VLDPE 1 | Prime Polymer K.K. | MORETEC 0398CN | Ethylene-octene copolymer | 0.907 | 121 | - |

(continued)

| Resin materials used in Examples and Comparative Examples | | | | | | |
|---|---|---|---|---|---|---|
| Abbreviation | Maker | Grade | Contents | Density (g/cm$^3$) | Tm (°C) | MFR (g/10min) |
| VLDPE 2 | Prime Polymer K.K. | - | Colored V L D P E (VLDPE 1 70 wt.% brown M/B 30 wt.%) | - | - | - |
| LLDPE 2 | Prime Polymer K.K. | MORETEC 0238CN | Colored L L D P E (LLDPE 2 70 wt.% brown M/B 30 wt.%) | 0.916 | 115 | 2.1 |
| EVA 1 | Exxon Mobile K.K. | LD362BW | EVA (VA content = 4.5 wt.%) | 0.927 | 104 | 2.0 |
| EVA 2 | Mitsui Polychemical K.K. | EVAFLEX P-0803 | EVA (VA content = 8 wt.%) | 0.93 | - | - |
| EVA 3 | | | Colored EVA (EVA 70 wt.% brown M/B 30 wt.%) | - | - | - |
| EVA 4 | Mitsui Polychemical K.K. | EVAFLEX P-1405 | EVA (VA content = 14 wt.%) | - | - | - |
| EVA 5 | Mitsui Polychemical K.K. | EVAFLEX P-1905 | EVA (VA content = 19 wt.%) | - | - | - |
| PA 1 | Toray K.K. | AMILAN CM1021XF | 6 nylon | 1.12 | 225 | - |
| PA 2 | - | - | Slipping agent-added 6 nylon (6 nylon (PA1) 95 wt.% slipping agent M/B 5 wt.%) | - | - | - |

Hot-shrinkable multilayer casing films prepared in Examples and Comparative Examples were evaluated according to the following methods.

[Evaluation methods]

1. Hot-water shrinkability

A film sample marked with 5 cm - or 10 cm - distances in a longitudinal or machine direction (MD) and a perpendicular or transverse direction (TD) was dipped in hot water adjusted at 90°C for 10 seconds, then taken out therefrom and immediately quenched in water at room temperature. Thereafter, the marked distances were measured and the decreases in the distances from the original distances of 5 cm or 10 cm were indicated with % values with respect to the original distances. One casing film sample was subjected to 5 times of the above measurement. Based on the average values, the hot-water shrinkability values are indicated, e.g., as 20/19 (%) for the longitudinal and transverse directions (MD/TD), respectively.

## 2. Break strength

A sample strip of 10 mm in width and 50 mm in length was subjected to a tensile test by using a tensile tester ("TENSILON RTC-1210", made by Orientec K.K.) at a tensile speed of 500 mm/min. to measure a force resulting in a break of the strip as a break strength. The measurement was performed for each of two strips cut out in the longitudinal and transverse directions (MD/TD) from a casing film sample.

## 3. Oxygen permeability

An oxygen gas permeability through a casing film sample was measured according to ASTM D3985-81 by using "MOCON OXTRAN-100" (made by Modem Control Co.) under the conditions of 23°C and 80 % R.H.

## 4. Moisture permeability

A moisture (water vapor) permeation rate through a casing film sample was measured by using "VAPOR PERMEATION TESTER-400" (made by Lissy Co.) under the conditions of 40°C and 90 % R.H.

## 5. Evaluation of lay-flat width (size) irregularity

A video measure ("3X2CB-Z", made by Omron K.K.) was set in a casing film take-up apparatus to take up 100 m of a casing film while continuously measuring the lay-flat film width determine a (lay-flat) width irregularity in terms of $\pm$ (mm) units based on differences of measured maximum and minimum values from the standard width (mm).

## 6. Evaluation of film color irregularity

A 1 m-long test strip was cut out in a machine (longitudinal) direction of a sample casing film and subjected to measurement of a color difference at equal intervals of 20 cm by using a color difference meter ("CR-300", made by Konika Minoruta K.K.). The measurement was performed 5 times for each sample, and the color irregularity was evaluated in terms of $\Delta$E (NBS unit) based on the average values.

$\Delta$E (NBS) was calculated according to the following formula (1):

$$\Delta E = [(\Delta L^*)^2 + (\Delta a^*)^2 + (\Delta b^*)^2]^{1/2} \qquad (1),$$

wherein $\Delta$L* represents a measure distribution range of brightness; $\Delta$a*, a measured distribution range of from red to green; and $\Delta$b*, a measured distribution range of yellowness.

Incidentally, CIE 1976 (L*a*b*) standards have determined color difference evaluation standards based on $\Delta$E (NBS unit) values as shown in Table 2 below.

[Table 2]

| Evaluation words of color difference | NBS unit |
|---|---|
| Very slightly different | 0 - 0.5 |
| Slightly different | 0.5 - 1.5 |
| Noticeably different | 1.5 - 3.0 |
| Remarkably different | 3.0 - 6.0 |
| Very remarkably different | 6.0 - 12.0 |
| Different types of color | Above 12 |

## 7. Evaluation of ring-form products

Three types of ring casings having inner diameter of 10 cm (10D), 15 cm (15D) and 20 cm (20D), respectively, were prepared from a sample casing film of 60 mm in lay-flat width by using a ring-forming machine (made by Kureha Corp.). Each casing was filled with livestock meat sausage at a filling rate of 10 % and subjected to 1 hour of steam cooking at 80°C, followed by quenching with cold water of ca. 10°C. The resultant ring-form product was observed with eyes with respect to necks and wrinkles on the outer circumference and the inner circumference of the ring and evaluated according to the following standard:

A: Finish appearance was good both on the outer and inner circumferences.
B: Slight neck(s) on the inner circumference, no wrinkles.
C: Necks on the outer and inner circumferences, wrinkles observed.

8. Creep percentage

A sample strip (of 100 mm x 20 mm in length (MD (or TD)) x width (TD (or MD)) formed by slitting a multilayer casing film was marked over a length of 50 mm and, after being provided with a weight attached to one end-thereof so as to apply a stress of 1 kgf/cm$^2$, was dipped in hot water at 80°C for 10 sec. Then, the marked length was measured, and a percentage of an increased length with respect to the original length was determined as a creep percentage (%). The test was repeated 5 times for each of longitudinal direction and transverse directions of a casing film sample. The average values determined for the respective directions are indicated as, e.g., 31/16 (MD/TD (%)).

9. Evaluation of vinyl acetate odor

Vinyl acetate odor was sensed by 5 panelists at a position just below the co-extrusion die for film preparation and also with respect to the resultant film, and evaluated according to the following standard:

A: Vinyl acetate odor was not sensed or only slightly sensed.
C: Severe vinyl acetate odor was sensed.

(Example 1)

By using an apparatus having an arrangement as roughly shown in Fig. 1, the respective resins shown in Table 1 were melt-extruded through totally 4 extruders 1 (one for each resin) and introduced into an annular die 2 for melt-bonding the respective resins to form a molten tubular product (parison) 3a having a laminate structure of Co-PA (20) /mod-VLDPE (2)/EVA 1 (25)/mod-VLDPE (2)/PA 2 (5) with thickness ratios indicated in the parentheses. The parison 3a was then caused to pass through a cold water bath 4 of 10 - 15°C via pinch rollers 5, then a warm water bath 6 of 70 - 80°C and pinch rollers 7 to form a bubble form tubular film 3c via a state 3b. The tubular film 3c was subjected to inflation biaxial stretching at stretching ratios of 2.5 times in machine direction (MD) and 3.1 times in transverse direction (TD) while being heated by means of a hot air ring 9 at 70 - 80°C.

Then, a biaxially stretched and laid-flat tubular film 3d thus formed was then introduced into a heat-treating tube 12 disposed between pairs of pinch rollers 10 and 11 to form a bubble-form tubular film 3e, which was then heat-treated for 2 - 3 sec. with steam at 80°C blown out of steam blowing slit ports 13, while being allowed to relax by 5 % in machine direction and 7 % in transverse direction. Thus, a heat-shrinkable multilayer casing film 3f having a lay-flat width of 60 mm was formed and taken up about a 3 inch-dia. paper core 14.

The thus-prepared heat-shrinkable multilayer casing film (clear in appearance) exhibited thicknesses and hot-water shrinkability, break strength, oxygen permeability, moisture permeability, lay-flat width irregularity and ring-formability, respectively measured or evaluated by the above-mentioned methods, as shown in Table 3.

(Examples 2, 3 and Comparative Examples 1 - 3)

Heat-shrinkable multilayer casing films (clear) of Examples 2, 3 and Comparative Examples 1 - 3 were prepared in the same manner as in Example 1 except for changing the layer structures as shown in Table 3 or 4.

The resultant heat-shrinkable multilayer casing films exhibited thicknesses and hot-water shrinkability, break strength, oxygen permeability, moisture permeability, lay-flat width irregularity and ring-formability, respectively measured or evaluated by the above-mentioned methods, as shown in Table 3 (Examples) and Table 4 (Comparative Examples).

In view of the results shown in Table 3, it is understood that the heat-shrinkable multilayer casing films prepared according to the present invention, inclusive of those of Examples 1 - 3, were excellent as represented by improvements in lay-flat width irregularity at the time of film production and also ring-formability.

On the other hand, as shown in Table 4, the films prepared in Comparative Examples 1 - 3 all caused difficulties in some of the evaluated items. More specifically, the film of Comparative Example 2 having a small thickness ratio of 37 % of the polyamide inner and outer layers with respect to the total thickness failed in providing a film due to frequent puncture of the bubble in the step of inflation stretching. As for the cases where the film production was possible, the casing film of Comparative Example 1 having a large thickness ratio of 74 % of the polyamide inner and outer layers with respect to the total thickness exhibited a large lay-flat width irregularity and also inferior ring-formability. Also, the casing film of Comparative Example 3 having an intermediate layer of VLDPE also exhibited a large lay-flat width irregularity and also unsatisfactory ring-formability.

[Table 3]

| Items and (units) | | Example-1 | Example-2 | Example-3 | Example-4 | Example-5 |
|---|---|---|---|---|---|---|
| Color tone | | Clear | Clear | Clear | Brown | Brown |
| Names and thicknesses ($\mu$ m) of layers | | | | | | |
| | 1st layer | Co-PA (20) | Co-PA (14) | Co-PA (30) | Co-PA (17) | Co-PA (27) |
| | 2nd layer | mod-VLDPE ( 2) | mod-VLDPE ( 2) | mod-VLDPE ( 2) | mod-VLDPE ( 2) | mod-VLDPE ( 2) |
| | 3rd layer | EVA1 (25) | EVA1 (20) | EVA2 (50) | EVA3 (28) | EVA3 (18) |
| | 4th layer | mod-VLDPE ( 2) | mod-VLDPE ( 2) | mod-VLDPE ( 2) | mod-VLDPE ( 2) | mod-VLDPE ( 2) |
| | 5th layer | PA 2 ( 5) | PA 2 ( 7) | PA 2 (10) | PA 2 ( 5) | PA 2 ( 5) |
| Total thickness ($\mu$m) | | 54 | 45 | 94 | 54 | 54 |
| Ratio of PA layers/total thickness (%) | | 46 | 46 | 42 | 40 | 60 |
| Hot-water shrinkability MD/TD(%) | | 20 / 19 | 17 / 16 | 22 / 20 | 18 / 17 | 25 / 25 |
| Break strength MD/TD(Mpa) | | 125 / 120 | 110 / 109 | 180 /170 | 115 / 113 | 150 / 147 |
| Oxygen permeability ($cm^3/m^2 \cdot day \cdot atm$) | | 145 | 180 | 150 | 175 | 125 |
| Moisture permeability ($g/m^2 \cdot 24hrs$) | | 27 | 38 | 30 | 26 | 40 |
| Lay-flat width irregularity ($\pm$ mm) | | 2.0 | 3.0 | 3. 5 | 3.8 | 4.0 |
| Color irregularity ($\triangle$E:NBS unit) | | - | - | - | 1. 0 | 1. 2 |
| Ring-formability | 10D | A | A | B | B | A |
| | 15D | A | A | B | B | A |
| | 20D | A | A | B | B | A |

[ Table 4]

| Items and (units) | | Comp. Example- 1 | Comp. Example-2 | Comp. Example -3 | Comp. Example -4 | Comp. Example -5 |
|---|---|---|---|---|---|---|
| Color tone | | Clear | Clear | Clear | Brown | Brown |
| Names and thicknesses ($\mu$m) of layers | | | | | | |
| | 1st layer | Co-PA (35) | Co-PA (15) | Co-PA (20) | Co-PA (20) | Co-PA (17) |

(continued)

| Items and (units) | Comp. Example- 1 | Comp. Example-2 | Comp. Example -3 | Comp. Example -4 | Comp. Example -5 |
|---|---|---|---|---|---|
| Color tone | Clear | Clear | Clear | Brown | Brown |
| 2nd layer | mod-VLDPE ( 2) | mod-VLDPE ( 2) | mod-VLDPE ( 2) | mod-VLDPE ( 2) | mod-VLDPE ( 2) |
| 3rd layer | EVA1 (10) | EVA1 (30) | VLDPE1 (20) | VLDPE2 (20) | LLDPE2 (28) |
| 4th layer | mod-VLDPE ( 2) | mod-VLDPE ( 2) | mod-VLDPE ( 2) | mod-VLDPE ( 2) | mod-VLDPE ( 2) |
| 5th layer | PA 2 ( 5) | PA 2 ( 5) | PA 2 ( 5) | PA 2 ( 5) | PA 2 ( 5) |
| Total thickness ($\mu$ m) | 54 | 54 | 49 | 49 | 54 |
| Ratio of PA layers 1 total thickness (%) | 74 | 37 | 51 | 51 | 40 |
| Hot-water shrinkability<br><br>MD/TD(%) | 23 / 23 | Film not obtained | 22 / 20 | 23 / 21 | 17 / 19 |
| Break strength<br>MD/TD<br>(Mpa) | 160 / 158 | ditto | 135 / 130 | 133 / 128 | 115 / 113 |
| Oxygen permeability<br>(cm$^3$/m$^2$·day·atm) | 115 | ditto | 135 | 137 | 175 |
| Moisture permeability<br>(g/m$^2$. 24hrs) | 50 | ditto | 26 | 26 | 25 |
| Lay-flat width irregularity<br>($\pm$ mm) | 4.2 | ditto | 4.3 | 4.3 | 5.0 |
| Color irregularity<br>(E :NBS unit) | - | - | - | 2.4 | 2.5 |
| Ring-formability<br>10D<br>15D<br>20D | C<br>C<br>C | -<br>-<br>- | C<br>C<br>C | C<br>C<br>C | C<br>C<br>C |

(Examples 4 - 5 and Comparative Examples 4 - 5)

Four types of heat-shrinkable multilayer casing films (colored in brown) were prepared in the same manner as in Example 1 except for the following modifications. More specifically, in each of these examples, the intermediate layer was caused to contain 30 wt.% of a brown master batch (M/B) ("SPEM-9X714", made by Sumika Color K.K.) to prepare the heat-shrinkable multilayer casing film. Further, the four types of heat-shrinkable multilayer casing films were prepared by adding the brown M/B to EVA in the intermediate layer and setting the thickness ratio of the PA layers to the total thickness at 40 % (Example 4) or 60 % (Example 5), by using VLDPE (Comparative Example 4) or LLDPE (Comparative Example 5) in the intermediate layer.

These casing films exhibited thicknesses, hot-water shrinkability, break strength, oxygen permeability, moisture permeability, lay-flat width irregularity and ring-formability respectively measured or evaluated by the above-mentioned methods as shown in Table 3 (Examples) and Table 4 (Comparative Examples).

As shown in Table 3, the heat-shrinkable, multilayer casing films of the present invention were provided with a remarkably reduced color irregularity in the case of forming colored casing films in addition to the improvements in lay-flat width irregularity at the time of film formation and ring-formability.

On the other hand, the casing films of Comparative Examples 4 and 5 (as shown in Table 4) exhibited lager lay-flat width irregularity and color irregularity and also were unsatisfactory with respect to ring-formability.

(Comparative Examples 6 - 7)

Two types of heat-shrinkable multilayer casing films were prepared in the same manner as in Example 1 except for replacing the intermediate layer of EVA-1 having a vinyl acetate content of 4.5 wt.% to an identical thickness of intermediate layer comprising EVA-4 having a vinyl acetate content of 14 wt.% (Comparative Example 6) or EVA-5 having a vinyl acetate content of 19 wt.% (Comparative Example 7). These casing films were evaluated principally with respect to creep percentage, moisture permeability and vinyl acetate odor along with the casing films of Example 1 and Comparative Example 3. The results are inclusively shown in Table 5 below.

[Table 5]

| Items and (units) | Example-1 | Comp. Example-6 | Comp. Example -7 | Comp. Example-3 |
|---|---|---|---|---|
| Color tone | Clear | Clear | Clear | Clear |
| Names and thicknesses ($\mu$m) of layers | | | | |
| 1st layer | Co-PA (20) | Co-PA (20) | Co-PA (20) | Co-PA (20) |
| 2nd layer | mod-VLDPE ( 2) | mod-VLDPE ( 2) | mod-VLDPE ( 2) | mod-VLDPE ( 2) |
| 3rd layer | EVA1 (25) | EVA4 (25) | EVE5 (25) | VLDPE (20) |
| 4th layer | mod-VLDPE ( 2) | mod-VLDPE ( 2) | mod-VLDPE ( 2) | mod-VLDPE ( 2) |
| 5th layer | PA 2 ( 5) | PA 2 ( 7) | PA 2 (7) | PA 2 ( 5) |
| Total thickness ($\mu$m) | 54 | 54 | 54 | 49 |
| Creep percentage MD/TD(%) | 31 / 16 | 40 / 30 | 42 / 35 | 28 / 16 |
| Moisture permeability (g/m$^2$·24hrs) | 27 | 48 | 56 | 26 |
| Vinyl acetate odor | A | C | C | A |
| Ring-formability 15D | A | B | C | C |

In view of the results shown in Table 5, it is understood that the multilayer casing film of the present invention (Example 1) was satisfactory with respect to creep percentage, moisture permeability, vinyl acetate odor and ring-formability, whereas the multilayer casing films of Comparative Examples 6 and 7 including intermediate layers of EVAs having larger vinyl acetate contents caused difficulties in some respects of the creep percentage, moisture permeability and vinyl acetate order and were also unsatisfactory with respect to ring-formability.

As described above, according to the present invention, there is provided a multilayer casing film improved in remaining problems, such as lay-flat width stability, ring-formability and color irregularity of colored casing, of conventional-polyamide-based heat-shrinkable multilayer casing films, while retaining suitable properties, such as gas-barrier property, meat adhesion, heat resistance, strength and shirrability of the conventional-polyamide-based heat-shrinkable multilayer casing films.

## Claims

1. A heat-shrinkable multilayer casing film, comprising at least 5 layers including an outer layer (a) comprising an aliphatic copolyamide resin, an adhesive resin layer (b), an intermediate layer (c) comprising an ethylene-vinyl acetate copolymer resin having a vinyl acetate content of 3 - 12 wt.%, an adhesive resin layer (b) and an inner layer (d) comprising an aliphatic polyamide resin disposed in an order of from the outer layer toward the inner layer; wherein the multilayer casing film has a hot-water shrinkability at 90°C of 10 - 30 % each in a longitudinal direction and a transverse direction, and a total thickness of the outer layer (a), the inner layer (d) and an optionally added additional aliphatic copolyamide resin layer, is 40 - 60 % of the thickness of all the layers of multilayer casing film.

2. A heat-shrinkable multilayer casing film according to claim 1, wherein the outer layer (a) comprises nylon 6-66 copolymer resin.

3. A heat-shrinkable multilayer casing film according to claim 1 or 2, wherein the inner layer (d) comprises nylon 6 polymer resin.

4. A heat-shrinkable multilayer casing film according to any of claims 1 - 3, having a lay-flat width irregularity in the transverse direction of in a range of at most±5 mm.

5. A process for producing a heat-shrinkable multilayer casing film according to any of claims 1 - 4, comprising: forming a parison comprising at least 5 melt-co-extruded layers including an outer layer (a) comprising an aliphatic copolyamide resin, an adhesive resin layer (b), an intermediate layer (c) comprising an ethylene-vinyl acetate copolymer resin having a vinyl acetate content of 3 - 12 wt.%, an adhesive resin layer (b), and an inner layer (d) comprising an aliphatic polyamide resin, disposed in an order of from the outer layer to the inner layer; subjecting the parison to quenching and re-heating in a hot water vessel; biaxially stretching the parison at 2.5-4 times each in a longitudinal and a transverse direction by injecting air into the parison, thereby to form an inflatively stretched multilayer casing film; again injecting air into the stretched multilayer casing film; and subjecting the stretched casing film to heat-relaxation at 3 - 10 % in each of the longitudinal and transverse directions by contact with hot water or steam at 70 - 95°C in a heat-treating tube.

**Patentansprüche**

1. Wärmeschrumpfbare Mehrschichten-Verpackungsfolie, die wenigstens 5 Schichten umfasst, die eine äußere Schicht (a), die ein aliphatisches Copolyamid-Harz umfasst; eine Harzklebeschicht (b); eine Zwischenschicht (c), die ein Ethylen-Vinylacetat-Copolymerharz mit einem Vinylacetatgehalt von 3-12 Gew.-% umfasst; eine Harzklebeschicht (b) und eine innere Schicht (d), die ein aliphatisches Polyamidharz umfasst, in der Reihenfolge von der äußeren Schicht zu der inneren Schicht angeordnet umfassen, wobei die Mehrschichten-Verpackungsfolie eine Schrumpfbarkeit in heißem Wasser mit 90°C von jeweils 10-30% in Längsrichtung und Querrichtung hat und eine Gesamtdicke der äußeren Schicht (a), der inneren Schicht (d) und einer gegebenenfalls angefügten zusätzlichen aliphatischen Copolyamid-Harzschicht 40-60% der Dicke aller Schichten der Mehrschichten-Verpackungsfolie ist.

2. Wärmeschrumpfbare Mehrschichten-Verpackungsfolie gemäß Anspruch 1, wobei die äußere Schicht (a) Nylon-6-66-Copolymerharz umfasst.

3. Wärmeschrumpfbare Mehrschichten-Verpackungsfolie nach Anspruch 1 oder 2, wobei die innere Schicht (d) Nylon-6-Polymerharz umfasst.

4. Wärmeschrumpfbare Mehrschichten-Verpackungsfolie nach einem der Ansprüche 1-3, die eine Unregelmäßigkeit der flachliegenden Breite in der Querrichtung im Bereich von höchstens ± 5 mm hat.

5. Verfahren zur Herstellung einer wärmeschrumpfbaren Mehrschichten-Verpackungsfolie nach einem der Ansprüche 1-4, umfassend: Formen eines Vorformlings, der wenigstens 5 schmelzcoextrudierte Schichten umfasst, die eine äußere Schicht (a), die ein aliphatisches Copolyamid-Harz umfasst; eine Harzklebeschicht (b); eine Zwischenschicht (c), die ein Ethylen-Vinylacetat-Copolymerharz mit einem Vinylacetatgehalt von 3-12 Gew.-% umfasst; eine Harzklebeschicht (b) und eine innere Schicht (d), die ein aliphatisches Polyamidharz umfasst, in der Reihenfolge von der äußeren Schicht zu der inneren Schicht angeordnet umfassen; Unterwerfen des Vorformlings einem Abschrek-ken und Wiedererwärmen in einem Heißwasserbehälter; biaxiales Verstrecken des Vorformlings im Verhältnis des 2,5-4-fachen jeweils in Längsrichtung und in Querrichtung durch Injizieren von Luft in den Vorformling, um so eine durch Aufblasen verstreckte Mehrschichten-Verpackungsfolie herzustellen; erneutes Injizieren von Luft in die verstreckte Mehrschichten-Verpackungsfolie und Unterwerfen der verstreckten Verpackungsfolie einer Wärme-Relaxation mit Raten von jeweils 3-10% in Längsrichtung und in Querrichtung durch Inkontaktbringen mit heißem Wasser oder Dampf mit 70-95°C in einem

**Revendications**

1. Film pour boyau multicouche thermorétractable, comprenant au moins 5 couches comportant une couche extérieure (a) comprenant une résine copolyamide aliphatique, une couche de résine adhésive (b), une couche intermédiaire (c) comprenant une résine copolymère d'acétate de vinyle-éthylène ayant une teneur en acétate de vinyle de 3 à 12 % en poids, une couche de résine adhésive (b) et une couche intérieure (d) comprenant une résine polyamide aliphatique, disposées dans un ordre allant de la couche extérieure vers la couche intérieure ; dans lequel le film pour boyau multicouche a une rétrécissabilité à l'eau chaude à 90 °C de 10 à 30 %, à la fois dans une direction longitudinale et une direction transversale, et une épaisseur totale de la couche extérieure (a), de la couche intérieure (d) et d'une couche de résine copolyamide aliphatique supplémentaire éventuellement ajoutée, représente 40 à 60 % de l'épaisseur de toutes les couches du film pour boyau multicouche.

2. Film pour boyau multicouche thermorétractable selon la revendication 1, dans lequel la couche extérieure (a) comprend une résine copolymère de nylon 6-66.

3. Film pour boyau multicouche thermorétractable selon la revendication 1 ou 2, dans lequel la couche intérieure (d) comprend une résine polymère de nylon 6.

4. Film pour boyau multicouche thermorétractable selon l'une quelconque des revendications 1 à 3, ayant une irrégularité de largeur à plat dans la direction transversale dans une plage de ± 5 mm tout au plus.

5. Procédé de fabrication d'un film pour boyau multicouche thermorétractable selon l'une quelconque des revendications 1 à 4, comprenant : la formation d'une paraison comprenant au moins 5 couches fondues coextrudées comportant une couche extérieure (a) comprenant une résine copolyamide aliphatique, une couche de résine adhésive (b), une couche intermédiaire (c) comprenant une résine copolymère d'acétate de vinyle-éthylène ayant une teneur en acétate de vinyle de 3 à 12 % en poids, une couche de résine adhésive (b), et une couche intérieure (d) comprenant une résine polyamide aliphatique, disposées dans un ordre allant de la couche extérieure à la couche intérieure ; la soumission de la paraison à un refroidissement et à un réchauffage dans une cuve d'eau chaude ; l'étirage biaxial de la paraison entre 2,5 et 4 fois, à la fois dans une direction longitudinale et une direction transversale, en injectant de l'air dans la paraison, pour ainsi former un film pour boyau multicouche étiré par gonflage ; l'injection à nouveau d'air dans le film pour boyau multicouche étiré ; et la soumission du film pour boyau étiré à une relaxation thermique entre 3 et 10 %, à la fois dans la direction longitudinale et la direction transversale, par contact avec de l'eau ou de la vapeur chaude entre 70 et 95 °C dans un tube de traitement thermique.

FIG. 1

1:EXTRUDER
2:ANNULAR DIE
3a
3b
3c
3d
3e
3f
5:PINCH ROLLER
4:WATER BATH
6:WARM WATER BATH
7
8
9:HOT AIR RING
10
11
12:HEAT-TREATING TUBE
13:STEAM PORT
13:STEAM PORT
14:TAKE-UP CORE

EP 1 892 092 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0059724 A1
- JP 3275012 B
- EP 0467039 B
- JP 6189668 A
- JP 6197679 A